# EUROPEAN PATENT APPLICATION

(11) **EP 4 575 778 A1**
(43) Date of publication of application: **25.06.2025**
(21) Application number: 23949944.5
(22) Date of filing: 27.11.2023
(51) Int. Cl.: G06F 9/455

(54) **DIGITAL TWIN SYSTEM FOR TARGET CONTROLLER**

(30) Priority: 25.08.2023 CN 202311080269
(71) Applicant: Casco Signal Ltd., Shanghai 200072 (CN)
(72) Inventor: XU, Jing, Shanghai 200072 (CN); YANG, Shuo, Shanghai 200072 (CN); JI, Zhijun, Shanghai 200072 (CN); WANG, Hexiang, Shanghai 200072 (CN); WANG, Guoxing, Shanghai 200072 (CN); YE, Ruiyuan, Shanghai 200072 (CN); ZHENG, Xiaojie, Shanghai 200072 (CN); XU, Xipeng, Shanghai 200072 (CN)
(74) Representative: Sanger, Phillip Simon
(86) International application number: PCT/CN2023/134395
(87) International publication number: WO 2025/043909

(57) **Abstract**

The present application provides an object controller digital twin system, comprising a system running layer, an environment construction layer, a test layer and an analysis layer. The system running layer is used for simulating a running state of the digital twin object controller; the environment construction layer is used for implementing the construction of a system running environment; the test layer is used for transferring a test instruction to the system running layer so as to perform a simulation test in the system running layer; and the analysis layer receives test returned data transferred by the test layer, and performs fault cause analysis and recording on fault-related data in the test returned data. By simulating the running state of the object controller on a host computer, the object controller digital twin system of the present application enables embedded development work to no longer rely on customized hardware, so that when real hardware is not manufactured, the hardware design, software function and system performance of the system can be verified in advance, and design defects are optimized in time after the design defects are found, thereby reducing the number of iterations of product research and development, and saving research and development costs.

## Description

### TECHNICAL FIELD

The present application relates to an object controller digital twin system.

### BACKGROUND

In the field of rail transport, an object controller replaces a relay circuit and a monitoring circuit in a traditional computer interlocking system, so as to drive and perform acquisition on a trackside device such as a point switch, a signal machine and a coding device.

With the large-scale promotion and application of the object controller in the field of the national railway and urban railway system, the features of a long research and development period and high resource consumption of the object controller gradually become research and development bottlenecks, affecting research and development progress of the object controller. As the object controller runs embedded software on a customized mother board, the research and development costs are high, and the customization period is long. If the object controller has a hardware design problem, it takes a long time to perform correction. The object controller has the features of a distributed system and a double 2-out-of-2 system, flexible and variable configurations, and a variety of loads; and in order to verify a plurality of application scenarios, a complex experimental environment needs to be built and a huge amount of hardware resources need to be used. With regard to a research and test team of an object controller, limited by hardware resources and a laboratory space, the number of real environments that can be built is relatively small, and a resource conflict is easily formed in development, debugging, and testing work, resulting in a delay in the project progress, which cannot adapt to the increasingly developed demands on a new object controller.

### SUMMARY

The object of the present invention is to provide an object controller digital twin system, which has advantages of low research and development costs and a short research and development period.

To achieve the object above, the present invention provides an object controller digital twin system, including:
a system running layer, in which the system running layer loads a CPU module for simulating a running state of a digital twin object controller;
an environment construction layer in which binary codes are loaded to implement the construction of a system running environment in the system running layer;
a test layer, used for transferring a test instruction to the system running layer to perform a simulation test in the system running layer, where the test layer uploads test returned data generated after the test is completed; and
an analysis layer, used for receiving the test returned data transferred by the test layer, and performing fault cause analysis and recording on fault-related data in the test returned data.

Preferably, the system running layer uses software to simulate an embedded kernel on a host computer, so as to simulate a register, a memory and an instruction set.

Preferably, the embedded kernel is an MCF54418 embedded kernel, and the instruction set is a Cold Fire V4 instruction set.

Preferably, the system running layer executes embedded software on the host computer, the embedded software including a ReWorks CERT operating system and application software.

Preferably, the system running layer includes a safety communication module and a GUSET module, and the running states of the safety communication module and the GUEST module are simulated in the system running layer.

Preferably, the system running layer is used for simulating a processing unit including a VCU as a core and a peripheral function circuit used for simulating an external signal as an input of the VCU.

Preferably, the VCU has a dual-channel architecture, each channel is provided with a CPU, and high-frequency 2oo2 interactive communication is implemented between the dual channels by simulating an internal serial port.

Preferably, external network communication, serial port communication and CAN communication interfaces are provided between the object controller digital twin system and an external interlocking system, and the CAN communication interface of the system running layer is used for connection and communication with a CAN bus of a real object controller system.

Preferably, the safety communication module includes a plurality of external network ports and an internal network port, the external network ports are used for external network communication, and the internal network port is used for communicating with a safety communication module of another module.

Preferably, the safety communication module and the GUEST module run independently of each other.

Preferably, the environment construction layer reads a pre-defined application design input file, constructs hardware device resources according to the application design input file to form a multi-configuration item multi-machine test environment, virtually runs a multi-chip CPU and peripherals in the host computer, and deploys a binary application program file and a binary application data file to the safety communication module and the GUEST module.

Preferably, the system running layer, the environment construction layer, the test layer and the analysis layer are physically isolated from one another, the system running layer, the environment construction layer, the test layer and the analysis layer can all run independently, and can also implement real-time interconnection by means of interfaces.

In conclusion, compared with the prior art, the object controller digital twin system provided by the present invention has the following beneficial effects:

By simulating the running state of the object controller on a host computer, the object controller digital twin system of the present application enables embedded development work to no longer rely on customized hardware, so that when real hardware is not manufactured, the hardware design, software function and system performance of the system can be verified in advance, and design defects are optimized in time after the design defects are found, thereby reducing the number of iterations of product research and development, and saving research and development costs. Executing a system function test, a software stability test and a software reliability test on the basis of a digital twin technique effectively alleviates a resource conflict formed by the development debugging work and test work faced by existing systems, shortening the research and development period. In addition, a multi-configuration item multi-machine test environment is formed according to the requirements of an application scenario, the recovery of a complex scenario on site is implemented during troubleshooting, the problem on site is quickly reproduced, and the cause of the failure is determined in time, thereby reducing the human consumption of after-sale work, and reducing the maintenance costs of a real system.

### BRIEF DESCRIPTION OF DRAWINGS

Fig. 1 is a schematic structural diagram of an object controller digital twin system according to the present application.
Fig. 2 is a schematic diagram of modeling of a VCU in an object controller according to the present application.

### DETAILED DESCRIPTION OF THE EMBODIMENTS

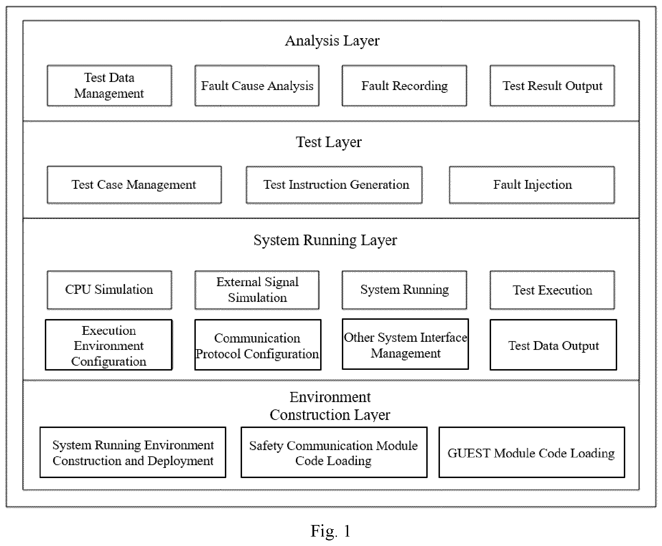

The technical solutions, the structural features, the object and the effects achieved in the embodiments of the present invention will be described in detail below with reference to Fig. 1 to Fig. 2 in the embodiments of the present invention.

It should be noted that, the accompanying drawings are in a very simplified form and all use a non-accurate proportion, which are merely used for conveniently and clearly illustrating the object of the embodiments of the present invention, and are not intended to be limit the specific conditions for implementing the present invention, thus do not have a technical significance, and shall belong to the scope of the technical contents disclosed in the present invention, without affecting the efficacy of the present invention and the object of the present invention.

It should be noted that, in the present invention, relational terms such as first and second are merely used to distinguish one entity or operation from another entity or operation, and do not necessarily require or imply any actual relationship or order between these entities or operations. Furthermore, the terms "include", "comprise", or any other variation thereof are intended to cover a non-exclusive inclusion, so that a process, a method, an article, or a device including a series of elements not only include elements that are explicitly listed, but also include other elements that are not explicitly listed, or further include inherent elements of the process, the method, the article, or the device.

As shown in Fig. 1, the present invention provides an object controller digital twin system, including a system running layer, an environment construction layer, a test layer and an analysis layer. The system running layer is the core of the whole object controller digital twin system. A virtual CPU module is dynamically loaded in the system running layer, and the virtual CPU module is used for simulating a running state of a digital twin object controller. The environment construction layer is the basis of the system running layer, and the environment construction layer is provided below the system running layer to ensure that the system running layer runs. Binary codes are loaded in the environment construction layer, so as to implement the construction of a system running environment. The environment construction layer reads a pre-defined application design input file, constructs hardware device resources according to the application design input file to form a multi-configuration item multi-machine test environment, virtually runs a multi-chip CPU and peripherals in the host computer, and deploys a binary application program file and a binary application data file to the safety communication module and the GUEST module. The test layer is provided between the system running layer and the analysis layer. Specifically, the test layer is provided below the system running layer and above the analysis layer. The test layer transfers a test instruction to the system running layer according to a test requirement, and transmits test returned data to the analysis layer. The analysis layer is located at the top layer of the whole system, and after the test is executed, the analysis layer receives the test returned data transferred by the test layer, performs fault cause analysis and recording on fault-related data in the test returned data, and outputs the test result. The system running layer, the environment construction layer, the test layer and the analysis layer are based on a digital twin technique, hardware resources of a host computer device are utilized to perform software and hardware function emulation on an object controller, and an embedded object machine environment is simulated by means of software, so as to implement virtualization of a complete and real system.

The system running layer uses software to simulate an embedded kernel on a host computer, so as to simulate a register, a memory and an instruction set, and configure a CPU dominant frequency, a memory and the like. The embedded kernel is an MCF54418 embedded kernel, and the instruction set is a Cold Fire V4 instruction set. An existing object controller adopts an MCF54418 embedded kernel to simulate the MCF54418 embedded kernel in the system running layer, so that a difference between a simulation result of an object controller digital twin system and an output of a real object controller is reduced, and the similarity degree between the digital twin system and the real object controller is improved.

The system running layer executes the embedded software on the host computer, the embedded software including the ReWorks CERT operating system and application software. The application program directly runs in the system running layer, and when the hardware input condition and the running time of the application program are the same as those of a real object controller, the same output as the real running result can be obtained.

The system running layer includes a safety communication module and a GUEST module, and the system running layer is used for simulating running states of the safety communication module and the GUEST module. The GUEST module refers to a board card (such as a state acquisition board card, a turnout driving board card, and a signal machine driving board card) responsible for controlling various signal devices in an object control system, controls outdoor signal devices according to a driving command, and acquires the states of the outdoor devices. According to the structural features of the safety communication module and the GUEST module in a real object controller, the safety communication module and the GUEST module both use a VCU (Virtual Control Unit) as a core processing unit, extend different peripheral function circuits, simulate an external signal as an input of an object controller digital twin system, and perform processing in the VCU after the simulated external signal is inputted into the system. In addition, the object controller digital twin system is configured with a corresponding running environment and configuration of a communication protocol according to scenario requirements, and is interconnected with other test systems by interface management to form a closed-loop running environment. According to the features of a two-out-of-two architecture of the real object controller, a virtual VCU module with a dual-channel architecture is built, and one CPU is provided in each channel. The real object controller with a two-out-of-two architecture refer to using two identical operation units, taking two operation results, if the two operation results are the same, outputting the two operation results, and if the two operation results are not the same, not outputting the two operation results. Each channel takes a virtual MCF54418CPU as a core processor, and two channels implement high-frequency 2oo2 (2 out of 2) interactive communication by means of a simulated internal serial port. The VCU within the system running layer is used to simulate a VCU within a real object controller, and the operation of the VCU is performed on the basis of the CPU loaded in the system running layer.

The safety communication module and the GUEST module run independently of each other. In order to simulate a scenario in which a board card is powered on, unplugged or powered off, the running of any safety communication module or GUEST module supports separately starting or stopping at any time. In order to simulate the scenario of a single-channel fault, any CPU of any safety communication module or GUEST module supports independent stop of running at any time.

An external network communication interface, a serial port communication interface and a CAN communication interface are provided between the system running layer and an external interlocking system, and the external interlocking system includes iLOCK-II, TACS, TIS and other systems. The CAN communication interface of the system running layer is used for connection and communication with a CAN bus of a real object controller system. iLock-II (Intelligent inter Locking System-II) is a new generation double 2-out-of-2 intelligent safe computer interlocking system, by adopting a high-performance trackside safety platform, technologies such as parallel driving and parallel acquisition, information safe sharing, multiple redundancy, and undisturbed switching are integrated, and user requirements of high performance, expandability, and easy maintenance are achieved; a TACS (Thin Autonomous Circumambulate System) refers to a signal system for implementing autonomous resource management and active interval protection of a train on the basis of a running plan and a real-time position, and the system achieves safer, more efficient, and more economical objectives by means of vehicle-to-ground interlocking and vehicle-to-vehicle cooperation; a TIS (Thin Control center and Interlocking integrated System) integrates functions of a train control center and a computer interlocking system, and controls a trackside device by means of an electronic execution unit or a relay interface, so that the number of devices of a ground signal system can be effectively reduced, and the complexity of the ground signal system is reduced; and a CAN (Controller Area Network) is a serial communication protocol bus for real-time applications, and may transfer signals by using twisted pairs. The number of serial ports and the baud rate setting, the number of Ethernet networks and IP configuration, and the number of CAN networks and parameter configuration are completed according to scenario requirements. Two virtual groups of CAN buses support connection and communication with real CAN buses, thereby satisfying a usage scenario where one object controller consists of some virtual modules and some real modules. A plurality of communication protocols are supported, the communication protocols are configured according to scenario requirements, and network communication with real devices of safety subsystems, such as IPS-200, RMU and TISPS, supports RSSP-I and FSFB2 protocols, network communication with real devices of the maintenance system, such as an SDM (System Diagnosis Maintenance System), a CMSS (Centralized Maintenance Support System) and an IOM (Integrated Operational Maintenance System), supports SNMP, TFTP, UDP and SNTP protocols, and the network communication with a host computer of the simulation test system is standardized by setting simulation interfaces. An IPS-200 (Interlocking Processing System-200) is a core subsystem of iLOCK-II, and has functions such as input and output management, logic operation, and safety checking; an RMU (Resource Management Unit) completes allocation and release of resources and associated resources according to a resource management command, communicates with an object controller within a management range, and completes control and management of an object controller device; and a TISPS (TIS processing subsystem) is a core processing unit of a TIS device, and integrates a train control central subsystem and interlock logic operation and control functions, thereby implementing train control interlocking integration. The RSSP-I (Railway Signal Safety Protocol-I) is a standard for safety communication between railway signal devices. The RSSP-I safety communication protocol specifies a functional structure and protocol for communication between closed transfer system devices. The RSSP-I safety communication protocol mainly performs identification and protection regarding the following safety threats: data frame repetition, data frame loss, data frame insertion, data frame order confusion, data frame errors, and data frame transfer timeout. The FSFB2 (Fail Safe Field Bus second generation) protocol is mainly divided into two layers: a safety layer and an application layer. The FSFB/2 safety layer may be implemented on a common data link layer that may be utilized to transfer safe data in an open transfer system. The safety layer is the core of the FSFB/2 protocol and avoids potential threats of an open transfer system, and safe transfer of data is mainly implemented by this layer. The FSFB/2 application layer implements a data exchange function by using a service provided by the safety layer. The SNMP (Simple Network Management Protocol) has advantages of simplicity and extensibility, and includes a database type (Database Schema), an application layer protocol (Application Layer Protocol) and some data files. The SNMP management protocol can not only enhance the effectiveness of a network management system, but also be used to manage and monitor resources in a network in real time. The TFTP (Trivial File Transfer Protocol) is a protocol used for trivial file transfer between a client and a server in a TCP/IP protocol family, and provides an uncomplicated file transfer service with low overhead. The UDP (User Datagram Protocol) provides a method for sending an encapsulated IP data packet without establishing a connection to an application program. The SNTP (Simple Network Time Protocol) is adapted from the NTP and is mainly used to synchronize a computer clock in the Internet.
the environment construction layer constructs and deploys a system running environment, reads a pre-defined application design input file, virtualizes a hardware device resource of an object controller according to a file content, and forms a multi-configuration item multi-machine test environment according to requirements of an application scenario, virtually runs a multi-chip CPU and peripherals thereof in a host computer, and deploys a binary application program file and a binary application data file to a safety communication module and a GUEST module of the virtualized object controller.

The test layer manages a test case, fault injection is completed according to test requirements, a test instruction is generated and transferred to a system running layer, an analysis layer receives test returned data and performs management, and performs fault analysis and recording on fault-related data, and debugging information and the test result are outputted by means of an RS232 serial port or a network interface.

The system running layer, the environment construction layer, the test layer and the analysis layer have high cohesion and low coupling, and each layer encapsulates some functions of the system, and provides an interface to other layers so as to use the functions encapsulated therein, so that the layers are physically separated from each other, thereby facilitating function expansion and system integration. The layers may run independently, or may be interconnected in real time by means of interfaces, and a plurality of running modes are implemented according to requirements of different usage scenarios.

The safety communication module includes a plurality of external network ports and an internal network port, the external network ports are used for external network communication, and the internal network port is used for communicating with a safety communication module of another module. In this embodiment, the safety communication module provides three external network ports to implement external network communication of the object controller, and provides an internal network port to implement internal network communication with another safety communication module in the system. For each channel, the binary codes and an electronic stamp of the secure communication module are stored in the Flash of the virtual VCU, and the safety communication module reads the configuration data by means of two SPI (Serial Peripheral Interface) channels and stores same in other virtual Flash peripherals. In the safety communication module, data is exchanged with a GUEST module in the system by means of two virtual CAN buses.

The overall architecture of the GUEST module is similar to that of the safety communication module, but the GUEST module of the real object controller has many hardware components such as relays, self-checking circuits, ADC digital sampling, and FPGA. In the system running layer, external signals are simulated according to the construction of each type of GUEST module, so that functions such as module self-checking and driving command execution and feedback, acquisition of switch quantity and acquisition of analog quantity are implemented, and necessary self-checking and running conditions are provided for the system.

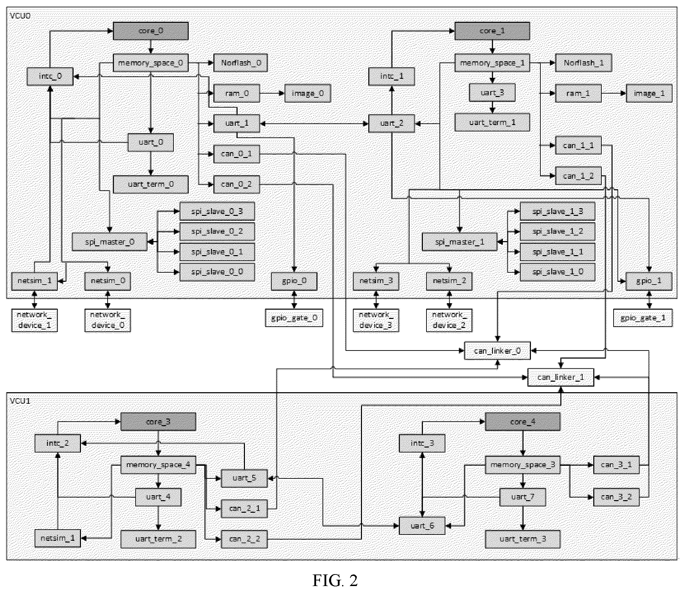

As shown in Fig. 2, a simulation project is constructed in a modeling simulation development environment interface based on a visual graphic, and the interior design of a VCU and multiple VCUs are visualized. The VCU_0 module describes the layout of dual CPUs in the VCU, and draws a system structure on the basis of the peripherals such as core, ram, spi, uart, flash, net, gpio, and can. The VCU_1 is used for describing that a plurality of VCUs communicate with each other in a can_linker manner.

The object controller digital twin system of the present embodiment is provided aiming at the technical problems existing in an existing object controller, such as high research and development costs, a long research and development period, easy formation of resource conflict, and needing to build a complex experimental environment, by designing a virtual digital twin system and establishing a mapping relationship between the digital twin system and a real object controller, mirroring of an entity object controller is implemented at a digital level, so as to predict a running result of a real object controller device, and modifying the research and development direction in time, thereby reducing research and development costs and improving the research and development efficiency. By visualizing the running state of an object controller on a host computer, embedded development work no longer relies on customized hardware, when real hardware is not manufactured, the hardware design, software function and system performance of a system can be verified in advance, and the system is optimized in time after design defects are found, thereby reducing the number of iterations of product research and development, and saving research and development costs. The object controller digital twin system of the present embodiment supports a plurality of communication protocols, and when laboratory simulation tests of the system such as iLOCK-II, TACS and TIS are performed, the rapid construction and deployment of the overall test environment are implemented, and hardware resources, laboratory space and time costs required by the existing device for building an environment are saved. In addition, in the object controller digital twin system of the present embodiment, a system function test, a software stability test and a software reliability test are executed on the basis of a digital twin technique, thereby effectively alleviating resource conflicts formed by the development debugging work and test work faced by an existing system, and shortening the research and development period. Furthermore, the object controller digital twin system of the present embodiment can also be used for forming a multi-configuration item multi-machine test environment according to the requirements of an application scenario, such that the recovery of a complex scenario on site can be implemented during investigation of a fault, so as to rapidly reproduce the problem on site, and determine a fault cause in time, thereby reducing the human consumption of after-sale work and reducing the maintenance costs of a real system.

The object controller digital twin system in the present embodiment can be used in research and development, testing, after-sale, and other works of an object controller, effectively reducing the number of iterations of product research and development, relieving resource conflicts formed by the research and debugging work and the testing work, rapidly determining a fault on site, reducing human consumption of after-sale work, and reducing the maintenance costs of a real system.

Although the contents of the present invention are described in detail with reference to the preferred embodiments above, it should be understood that the description above should not be taken as limiting. After reading the foregoing disclosure, many modifications and alternatives to the present invention by those skilled in the art will be apparent. Therefore, the protection scope of the present invention should be defined by the appended claims.

## Claims

1. An object controller digital twin system, comprising:
a system running layer, wherein the system running layer loads a CPU module for simulating a running state of a digital twin object controller;
an environment construction layer in which binary codes are loaded to implement the construction of a system running environment in the system running layer;
a test layer, used for transferring a test instruction to the system running layer to perform a simulation test in the system running layer, wherein the test layer uploads test returned data generated after the simulation test is completed; and
an analysis layer, used for receiving the test returned data transferred by the test layer, and performing fault cause analysis and recording on fault-related data in the test returned data.

2. The object controller digital twin system according to claim 1, wherein the system running layer uses software to simulate an embedded kernel on a host computer, so as to simulate a register, a memory and an instruction set.

3. The object controller digital twin system according to claim 2, wherein the embedded kernel is an MCF54418 embedded kernel, and the instruction set is a Cold Fire V4 instruction set.

4. The object controller digital twin system according to claim 2, wherein the system running layer executes embedded software on the host computer, the embedded software comprising a ReWorks CERT operating system and application software.

5. The object controller digital twin system according to claim 1, wherein the system running layer comprises a safety communication module and a GUSET module, and the running states of the safety communication module and the GUEST module are simulated in the system running layer.

6. The object controller digital twin system according to claim 5, wherein the system running layer is used for simulating a processing unit comprising a VCU as a core and a peripheral function circuit used for simulating an external signal as an input of the VCU.

7. The object controller digital twin system according to claim 6, wherein the VCU has a dual-channel architecture, each channel is provided with a CPU, and high-frequency 2oo2 interactive communication is implemented between the dual channels by simulating an internal serial port.

8. The object controller digital twin system according to claim 7, wherein an external network communication interface, a serial port communication interface and a CAN communication interface are provided between the system running layer and an external interlocking system, and the CAN communication interface of the system running layer is used for connection and communication with a CAN bus of a real object controller system.

9. The object controller digital twin system according to claim 8, wherein the safety communication module comprises a plurality of external network ports and an internal network port, the external network ports are used for external network communication, and the internal network port is used for communicating with a safety communication module of another module.

10. The object controller digital twin system according to claim 5, wherein the safety communication module and the GUEST module run independently of each other.

11. The object controller digital twin system according to claim 5, wherein the environment construction layer reads a pre-defined application design input file, constructs hardware device resources according to the application design input file to form a multi-configuration item multi-machine test environment, virtually runs a multi-chip CPU and peripherals in a host computer, and deploys a binary application program file and a binary application data file to the safety communication module and the GUEST module.

12. The object controller digital twin system according to claim 1, wherein the system running layer, the environment construction layer, the test layer and the analysis layer are physically isolated from one another, the system running layer, the environment construction layer, the test layer and the analysis layer can all run independently, and can also implement real-time interconnection by means of interfaces.
